# EUROPEAN PATENT APPLICATION

(11) **EP 4 606 642 A1**
(43) Date of publication of application: **27.08.2025**
(21) Application number: 25158462.9
(22) Date of filing: 18.02.2025
(51) Int. Cl.: B60Q 1/26, F21S 43/14, F21S 43/237, F21S 43/239, F21S 43/243, F21S 43/20, F21S 43/30, F21S 43/40

(54) **MULTI-FUNCTIONAL LIGHT MODULE FOR A REAR VIEW DEVICE OF A VEHICLE, EXTERIOR REAR VIEW DEVICE AND VEHICLE**

(30) Priority: 22.02.2024 US 202418584143; 22.02.2024 US 202418584153
(71) Applicant: Motherson Innovations Company Ltd., London EC2N 2AX (GB)
(72) Inventor: SINELLI, Gary, Marysville, Michigan, 48040 (US); DePALMA, Donald, Marysville, Michigan, 48040 (US); FRALEY, Alan, Marysville, Michigan, 48040 (US); D'ANDREA, Anthony P., Marysville, Michigan, 48040 (US)
(74) Representative: Weber-Bruls, Dorothée

(57) **Abstract**

The present invention refers to a light module (14, 140) configured for an exterior rear view device (10) of a vehicle, comprising: a housing (24, 240); a lens (22, 220) attached to the housing (24, 240) and including at least a first lens section (26, 260) that is configured to direct light in a first direction and a second lens section (28, 280) that is configured to direct light in a second direction; at least one first light emitting diode (LED) (30, 300) mounted within the housing (24, 240); at least one second LED (32, 340) mounted within the housing (24, 240) and configured to emit light through the first lens section (26, 260); and a light pipe (36, 360) mounted within the housing (14, 140) and configured to receive light emitted from the first LED (30, 300) and emit light through the second lens section (28, 280). The first and second LEDs (30, 32, 300, 340) are all white light emitting LEDs, wherein white light emitted from the first LED (30, 300) is filtered to provide amber light that is emitted through the second lens section (28, 280), and in use of the light module (14, 140), with the light module (14, 140) being attached to the rear view device (10), which in turn is attached to the vehicle, the light emitted through the second lens section (28, 280) is directed in a side-and/or rear-facing direction with respect to a direction of forward movement of the vehicle, while the light emitted through the first lens section (26, 260) is directed in a forward-facing direction with respect to a direction of forward movement of the vehicle. The light emitted through the second lens section (28, 280) is adapted to provide a running light and/or turn signal function for the vehicle, with preferably the light emitted through the second lens section (28, 280) being controlled in a normally-on state to provide the running light function and turns off and on to provide the turn signal function for the vehicle. It also relates to an exterior rear view device (10) of a vehicle comprising a head (16) supporting at least one reflective element and/or at least one camera, and at least one such light module (14, 140), as well as to a vehicle with such an exterior rear view device (10).

## Description

The present invention relates generally to a multi-functional light module for a vehicle. In particular is relates to a light module for an exterior rear view device of a vehicle according to the pre-amble of claim 1, an exterior rear view device with such a light module, and a vehicle with such a rear view device.

Vehicles, such as passenger cars, vans, and trucks, typically include rear view devices. These devices increasingly include light modules to provide various lighting functions for the vehicle, such as security lights, running lights, puddle lights, turn signal lights, and spotlights. These lighting functions packaged in a single light module are often used for driver notification and for security and safety functions. Packaging multiple lighting functions in a rear view device can create difficulty in utilizing one design across different countries with different government regulations relating to the type and color of each light function. In some cases it may be desirable to have the light functions differ across countries. Due to government regulations, light emitting from the rear view device may be required to maintain a particular color for all light associated with a given operation. When the operations vary from product line to product line, communizing one light source in a multi-functional light module becomes more challenging.

It is the object of the present invention to further develop the known light module to overcome the drawbacks of the prior art. In particular, it is the object to provide a system where the light system may be communized and the light emitted may be modified to meet regulations.

This object is solve by the characterizing features of claim 1. Sub-claims 2 to 13 described preferred embodiments according to the present invention.

According to a first alternative, the present invention may provide, a light module for an exterior rear view device of a vehicle, comprising a housing, a lens attached to the housing and including at least a first lens section that is configured to direct light in a first direction and a second lens section that is configured to direct light in a second direction, a light module printed circuit board (PCB) mounted within the housing, a first light emitting diode (LED) attached to the light module PCB, a plurality of second LEDs attached to the light module PCB and configured to emit light through the first lens section, and a light pipe mounted within the housing and configured to receive light emitted from the first LED and emit light through the second lens section.

Light emitted through the first lens section is white light and light emitted through the second lens section is non-white light. The first LED and the plurality of second LEDs may be all white light emitting LEDs, where white light emitted from the first LED is filtered to the provide the non-white light emitted through the second lens section. The light emitted through the second lens section is amber light.

The light emitted through the first lens section is directed in a forward-facing direction with respect to a direction of forward movement of the vehicle.

In embodiments, the light module may further include a plurality of light-directing structures configured to direct light from the plurality of second LEDs through the first lens section. In embodiments, the plurality of light-directing structures include reflective surfaces that direct light from the plurality of second LEDs in a direction perpendicular to a surface of the light module PCB and through the first lens section.

The light emitted through the second lens section is directed in a side- and/or rear-facing direction with respect to a direction of forward movement of the vehicle. Further, the light emitted through the second lens section provides a running light and/or turn signal function for the vehicle. Still further, the light emitted through the second lens section is in a normally-on state to provide the running light function and turns off and on to provide the turn signal function for the vehicle.

In embodiments, the light module may further include an optical coupler configured to receive light from the first LED and direct light into the light pipe. In embodiments, the optical coupler includes a filter that filters the spectrum of the white light emitted from the first LED to provide the non-white light emitted through the second lens section. Embodiments may further include a filter attached to the optical coupler that filters the spectrum of the white light emitted from the first LED to provide the non-white light emitted through the second lens section. In other embodiments, the light pipe filters the white light emitted from the first LED to provide the non-white light emitted through the second lens section.

According to a second alternative, the present disclosure may provide a light module for an exterior rear view device of a vehicle, comprising a housing, a lens attached to the housing and including at least a first lens section that is configured to direct light in a first direction and a second lens section that is configured to direct light in a second direction, a first light module PCB mounted within the housing, a first LED attached to the first light module PCB, a light pipe mounted within the housing and configured to receive light emitted from the first LED and emit light through the second lens section; a second LED attached to the first light module PCB; and at least one reflector mounted with the housing and configured to reflect light emitted from the second LED through the first lens section.

In embodiments, the light module may further include a second light module PCB mounted within the housing, and a third LED attached to the second light module PCB, where the at least one reflector is further configured to reflect light emitted from the third LED through the first lens section.

As for the first alternative, light emitted through the first lens section is directed in a forward-facing direction with respect to a direction of forward movement of the vehicle. The second and third LEDs may be configured to emit light in one or more directions different than the forward-facing direction, and the at least one reflector may be configured to re-direct the light emitted from the second and third LEDs in the forward-facing direction.

The light emitted through the first lens section of the second alternative is white light and light emitted through the second lens section is non-white light. The first, second and third LEDs are white light emitting LEDs, and white light emitted from the first LED is filtered to provide the non-white light emitted through the second lens section. The light emitted through the second lens section is amber light, and the light emitted through the second lens section is directed in a side- and/or rear-facing direction with respect to a direction of forward movement of the vehicle, to provide a running light and/or turn signal function for the vehicle. Further, light emitted through the second lens section is in a normally-on state to provide the running light function and may turn off and on to provide the turn signal function for the vehicle.

In embodiments of the second alternative, the light module may also include an optical coupler configured to receive light from the second LED and direct light into the light pipe. The optical coupler may, for example, comprise or have an attached optical filter that filters the spectrum of white light emitted from the second LED to provide non-white light emitted through the second lens section. In embodiments, an optical coupler and/or optical filter may be welded or clipped to the light pipe. In other embodiments, the light pipe may be configured to filter white light emitted to provide non-white light emitted through the second lens section.

The present invention also refers to an exterior rear view device of a vehicle comprising at least one light module disclosed herein. The exterior rear view device may further comprise a head supporting at least one reflective element and/or at least one camera. It may also comprise a base configured to be attached to a vehicle surface, wherein preferably the head is moveably attached to the base.

Such an exterior rear view device may be used with different motor vehicles as the light module is a multi-functional light module.

The foregoing summary, as well as the following detailed description, will be better understood when read in conjunction with the appended drawings. For the purpose of illustration, certain examples of the present invention are shown in the drawings. It should be understood, however, that the present invention is not limited to the precise arrangements and instrumentalities shown. The accompanying drawings, which are incorporated in and constitute a part of this specification, illustrate an implementation of system, apparatuses, and methods consistent with the present invention and, together with the detailed description, serve to explain advantages and principles consistent with the present invention, wherein:
- FIG. 1: illustrates an example perspective view of an exterior rear view device including a multi-function light module according to the present invention;
- FIG. 2: illustrates a front perspective view of the multi-function light module according to the present invention as shown in FIG. 1;
- FIG. 3: illustrates a sectional view of a first embodiment of the multi-function light module shown in FIG. 2;
- FIGS. 4-6: illustrate examples of the multi-functional light module of FIG. 3 with different optical filters to provide non-white light;
- FIG. 7: illustrates another sectional view of a second embodiment of the multi-function light module shown in FIG. 2; and
- FIGS. 8-10: illustrate examples of the multi-functional light module of FIG. 7 with different optical filters to provide non-white light.

The following description is exemplary in nature and is not intended to limit the present invention, application, or uses. It should be understood that throughout the drawings, corresponding reference numerals indicate like or corresponding parts and features.

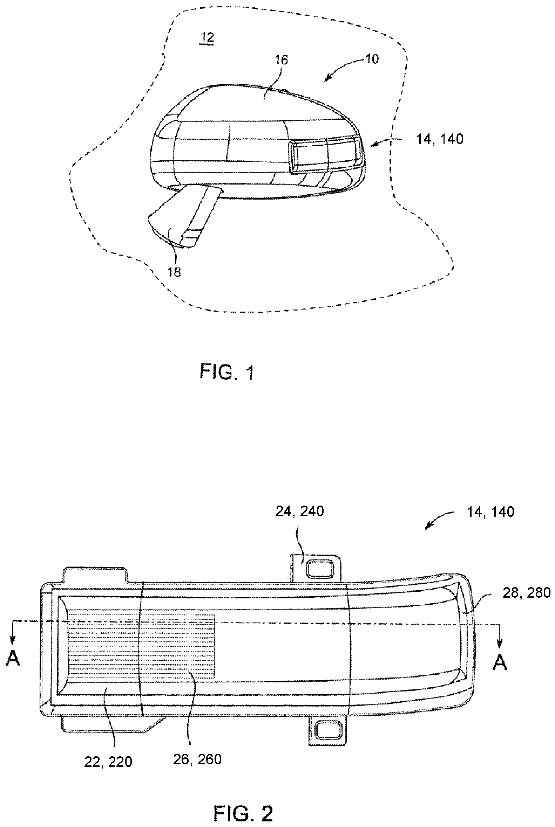

FIG. 1 illustrates an example perspective view of a rear view device 10 including a light module 14, 140 being multi-functional. The exterior rear view device 10 further includes a head 16 and a base 18 and is mounted on a vehicle surface 12. The head 16 is configured to carry at least a reflective element (not shown). In addition, the head 16 may carry at least one camera. In an embodiment, the rear view device may be in the form of a camera pod with a head carrying at least one camera.

The rear view device 10 in FIG. 1 is mounted to an A-pilar, but may be mounted in other locations on a motor vehicle in other embodiments. The rear view device 10 may also have other functions, such as power-folding capability, breakaway capability, telescoping capability, and/or other light assemblies mounted on the head 16 or the base 18.

FIG. 2 is a perspective view of the light module 14, 140. The light module 14, 140 has a lens 22, 220 which may contain optics to direct or modify one or more light sources mounted behind the lens 22, 220. A housing 24, 240 is used to mount the components of the light module 14, 140 and provide a mounting arrangement for fastening the light module 14, 140 to the head 16. The lens 22, 220 is connected or joined to the housing 24, 240 (e.g., by welding, adhesive, or other known fastening method) and has an inner surface and an outer surface which provide a viewing surface that is illuminated by the light module 14, 140 in use. The lens 22, 220 includes at least a first lens section 26, 260 that is configured to direct light in a first direction and a second lens section 28, 280 that is configured to direct light in a second direction. The first lens section 26, 260 is configured to direct light in a forward-facing direction with respect to a direction of forward movement of the vehicle, for example to provide a forward-facing spotlight for the vehicle. The second lens section 28, 280 is configured to direct light in a side- and/or rear-facing direction with respect to a direction of forward movement of the vehicle, to provide a running light and/or turn signal function for the vehicle.

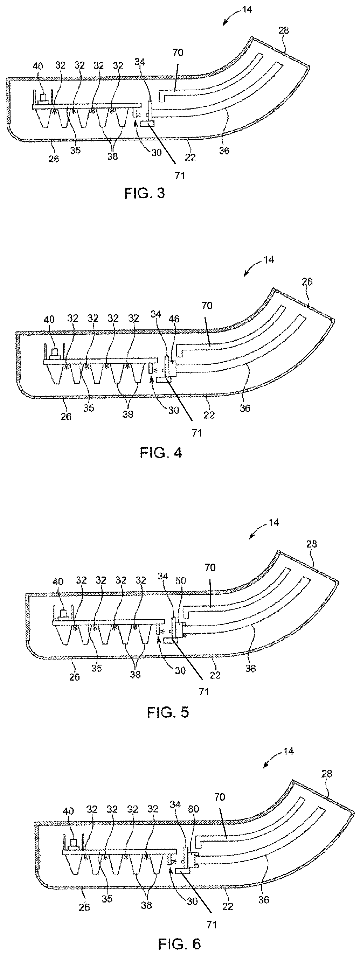

FIG. 3 illustrates a sectional view of the light module 14 according to a first alternative, utilizing the section A-A illustrated in FIG. 2. As shown in FIG. 3, the light module 14 includes a first light emitting diode (LED) 30 and a plurality of second LEDs 32. All LEDs 30, 32 may be mounted to and controlled through the same printed circuit board (PCB) 35. The PCB 35 may a flexible PCB. Also attached to the light module PCB 35 there may be a plurality of light-directing structures 38 and an connector device 40 for electrically connecting the light module PCB 35 to a wire harness for the rear view device 10. The light-directing structures 38 may, for example, include reflective surfaces that direct light from the plurality of second LEDs 32 in a direction perpendicular to the surface of the light module PCB 35 and through the forward-facing portion 26 of the light module lens 22. In this way, the second LEDs 32 may provide a forward-facing light function for the light module 14, such as a forward-facing spotlight. For example, in embodiments, the second LEDs 32 may include 2-4 white LEDs having a light intensity that is selected to provide a spotlight function.

As illustrated, the first LED 30 on the light module PCB 35 may be directed in a different direction than the plurality of second LEDs 32, such as in a direction parallel to the surface of the PCB 35. In the illustrated embodiment, the light module 14 further includes an optical coupler 34 located adjacent the first LED 30 and configured to direct light from the first LED 30 into a light pipe 36, such as an optic fiber or other mechanism for transporting and emitting light. The light pipe 36 is configured to receive light from the first LED 30 and emit the light in a direction different than the light emitted from the plurality of second LEDs 32, such as through the side- and/or rear-facing portion 28 of the light module lens 22. In this way, the first LED 30 and the associated light pipe 36 may be used, for example, to provide a side- and/or rear-facing function for the light module 14, such as a turn signal light.

Further, a screening and/or reflecting element 70 may run parallel to the light pipe 36 on the light pipe side opposite to the first lens section 26 such that light is only emitted through the first and second light sections 26, 28 and does not impinge on the housing 24.

Still further, a screening and/or reflecting element 71 may be associated with the first LED 30 to avoid light to directly pass the first lens section 26 and, thus, that the LED 30 may be seen from the outside of the light module 14.

In order to provide a specified color for the side-facing light function, the optical coupler 34 may include or have an attached colored lens to modify the color of the first LED 30. Thus, the first LED 30 and the plurality of second LEDs 32 may all be white light LEDs, and the color lens may be provided to modify the color of the light emitted by the first LED 30. For example, if the first LED 30 is utilized to provide a turn signal function, then an amber-colored lens may be included to change white light emitted by the first LED 30 to amber light emitted from the light pipe 36 through a side-facing portion of the light module lens 22. In another embodiment, the light pipe 36 may be configured (e.g., colored) to filter white light emitted from the first LED 30 to provide the desired color of non-white light emitted through the second lens section 28. In other embodiments, for example as shown in FIGS. 4-6, an optical filter 46 may be included between the first LED 30 and light pipe 36 to provide the desired light color.

In one embodiment, the light emitted from the first LED 30 and light pipe 36 may be controlled (e.g., by a controller coupled to the connector device 40) to provide non-white light through the second lens section 28 that is in a normally-on state to provide the running light function for the vehicle, and that turns off and on to provide the turn signal function for the vehicle.

As shown in FIG. 4, the light module 14 may further includes the optical filter 46 (e.g., a colored lens) to modify the color of the first LED 30. For instance, in an embodiment, the first LED 30 and plurality of second LEDs 32 may all be white light LEDs, and the optical filter 46 may be provided to modify the color of the light emitted by the first LED 30. For example, if the first LED 30 is utilized to provide a turn signal function, then an amber-colored lens may be included as the optical filter 46 to change white light emitted by the first LED 30 to amber light emitted from the light pipe 36 through the side-facing section 28 of the light module lens 22.

In embodiments, an optical filter (e.g., colored lens) may be welded or clipped to the light pipe 36. For example, FIG. 5 illustrates an embodiment with an optical filter 50 that is welded to the light pipe 36, and FIG. 6 another embodiment with an optical filter 60 that is clipped to the light pipe 36.

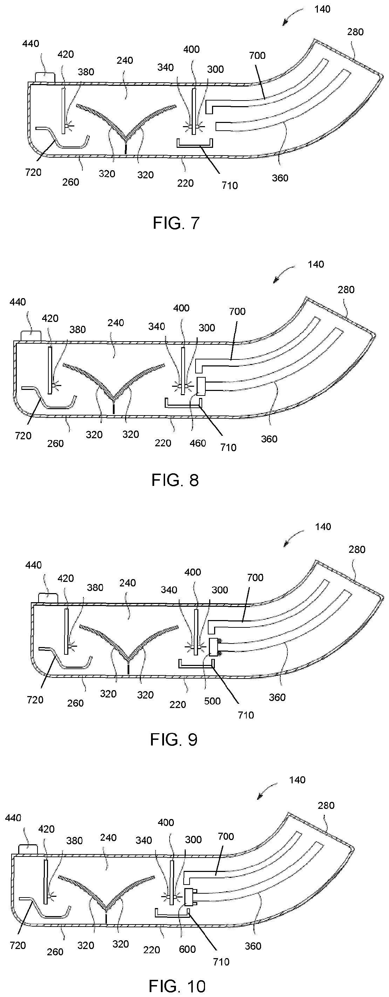

FIG. 7 illustrates a sectional view of the light module 140, according to a second alternative, utilizing the section A-A illustrated in FIG. 2. As shown in FIG. 7, the light module 140 includes a first light module PCB 400, a second light module PCB 420, a plurality of reflectors 320, and a light pipe 360 mounted within the housing 240. A first LED 300 is attached to a first side of the first light module PCB 400 in a direction facing the light pipe 360, a second LED 340 is attached to a second side of the first light module PCB 400 in a direction facing the reflectors 320, and a third LED 380 is attached to the second light module PCB 420 in a direction facing the reflectors 320. Also attached to the first and second light module PCBs 400, 420 is a connector device 440 for electrically connecting the light module PCBs 400, 420 to a wire harness for the rear view mirror device 10.

The reflectors 320 are configured to reflect light emitted from the second and third LEDs 340, 380 through the forward-facing first lens section 260. In this way, the second and third LEDs 340, 380 may provide a forward-facing light function for the light module 140, such as a forward-facing spotlight. In embodiments, one or both of the second and third LEDs may include multiple LEDs to provide a desired forward-facing light intensity. For example, in embodiments, the second and third LEDs 340, 380 may include 2-4 white LEDs having a light intensity that is selected to provide a spotlight function.

The light pipe 360 is configured to receive light emitted from the first LED 300 and emit light through the second lens section 280. The light pipe 360 may, for example, comprise an optic fiber or other mechanism for transporting and emitting light. The light pipe 360 is configured to receive light from the first LED 300 and emit the light in a direction different than the light emitted from the second and third LEDs 300, 380, such as through a side- and/or rear-facing section 260 of the light module lens 220. In this way, the first LED 300 and the associated light pipe 360 may be used, for example, to provide a side- and/or rear-facing function for the light module 140, such as a running light and/or turn signal light.

Further, a screening and/or reflecting element 700 may run parallel to the light pipe 360 on the light pipe side opposite to the first lens section 260 such that light is only emitted through the first and second light sections 260, 280 and does not impinge on the housing 240.

Still further, screening and/or reflecting elements 710, 720 may be associated with all LEDs 300, 340, 380 to avoid light to directly pass the first lens section 260 and, thus, that the LEDs 300, 340, 380 may be seen from the outside of the light module 140.

In embodiments, the light emitted through the forward-facing first lens section 260 by the second and third LEDs 340, 380 may be white light, and the light emitted through the side- and/or rear-facing second lens section 280 by the first LED 300 may be non-white light, such as amber light. In an embodiment, the light emitted by the first LED 300 may be filtered to the provide the non-white light (e.g., amber light) emitted through the second lens section 280. In one embodiment, the light pipe 360 may be configured (e.g., colored) to filter white light emitted from the first LED 300 to provide the desired color of non-white light emitted through the second lens section 280. In other embodiments, for example as shown in Figs. 8-10, an optical filter may be included between the first LED 300 and light pipe 360 to provide the desired light color.

The light emitted from the first LED 300 and the light pipe 360 may be controlled *(e.g.,* by a controller coupled to the connector device 440) to provide non-white light through the second lens section 280 that is in a normally-on state to provide the running light function for the vehicle, and that turns off and on to provide the turn signal function for the vehicle.

As shown in Fig. 8, the light module 140 may further includes an optical coupler 460 located adjacent the first LED 300 and configured to direct light from the first LED 300 into the light pipe 360. In order to provide a specified color for the side-facing light function, the optical coupler 460 may include or have an attached optical filter *(e.g.,* a colored lens) to modify the color of the first LED 300. For instance, in an embodiment, the first LED 300 and the second and third LEDs 340, 380 may all be white light LEDs, and a color filter may be provided, for example being comprised by the optical coupler 460) to modify the color of the light emitted by the first LED 300. For example, if the first LED 300 is utilized to provide a turn signal function, then the color filter may be an amber-colored lens to change white light emitted by the first LED 300 to amber light emitted from the light pipe 360 through the side-facing section 280 of the light module lens 220.

In embodiments, an optical filter (e.g., colored lens) may be welded or clipped to the light pipe 360. For example, Fig. 9 illustrates an embodiment with an optical filter 500 that is welded to the light pipe 360, and Fig. 10 another embodiment with an optical filter 600 that is clipped to the light pipe 360.

It will be appreciated by those skilled in the art that changes could be made to the embodiments described above without departing from the broad inventive concept thereof. It is understood, therefore, that the invention disclosed herein is not limited to the particular embodiments disclosed, and is intended to cover modifications within the spirit and scope of the present invention.

### REFERENCE SIGNS

- 10: rear view device
- 12: vehicle surface
- 14: light module
- 16: head
- 18: mirror base
- 22: lens
- 24: housing
- 26: first lens section
- 28: second lens section
- 30: first LED
- 32: plurality of second LEDs
- 34: optical coupler
- 35: light module PCB
- 36: light pipe
- 38: light-directing structures
- 40: electrical connector
- 46: optical filter
- 50: welded optical filter
- 60: clipped optical filter
- 70, 71: screening and/or reflecting element
- 140: light module
- 220: lens
- 240: housing
- 260: first lens section
- 280: second lens section
- 300: first LED
- 320: reflectors
- 340: second LED
- 360: light pipe
- 380: third LED
- 400: first PCB
- 420: second PCB
- 440: connector device
- 460: optical filter
- 500: welded optical filter
- 600: clipped optical filter
- 700-720: screening and/or reflecting element

## Claims

1. A light module (14, 140) configured for an exterior rear view device (10) of a vehicle, comprising:
a housing (24, 240);
a lens (22, 220) attached to the housing (24, 240) and including at least a first lens section (26, 260) that is configured to direct light in a first direction and a second lens section (28, 280) that is configured to direct light in a second direction;
at least one first light emitting diode (LED) (30, 300) mounted within the housing (24, 240);
at least one second LED (32, 340) mounted within the housing (24, 240) and configured to emit light through the first lens section (26, 260); and
a light pipe (36, 360) mounted within the housing (14, 140) and configured to receive light emitted from the first LED (30, 300) and emit light through the second lens section (28, 280),
**characterized in that**
the first and second LEDs (30, 32, 300, 340) are all white light emitting LEDs, wherein
• white light emitted from the first LED (30, 300) is filtered to provide amber light that is emitted through the second lens section (28, 280), and
• in use of the light module (14, 140), with the light module (14, 140) being attached to the rear view device (10), which in turn is attached to the vehicle, the light emitted through the second lens section (28, 280) is directed in a side- and/or rear-facing direction with respect to a direction of forward movement of the vehicle, while the light emitted through the first lens section (26, 260) is directed in a forward-facing direction with respect to a direction of forward movement of the vehicle, wherein
∘ the light emitted through the second lens section (28, 280) is adapted to provide a running light and/or turn signal function for the vehicle,
∘ with preferably the light emitted through the second lens section (28, 280) being controlled in a normally-on state to provide the running light function and turns off and on to provide the turn signal function for the vehicle.

2. The light module of claim 1, further comprising
an optical coupler (34, 460) configured to receive light from the first LED (30, 300) and direct light into the light pipe (36, 360), and/or
an optical filter (46, 50, 60, 500, 600), preferably comprising a colored lens, that filters the spectrum of the white light emitted from the first LED (30, 300) to provide the non-white light emitted through the second lens section (28, 280).

3. The light module of claim 2, wherein
the optical coupler (34, 460) comprises the optical filter, and/or
the optical filter (50, 500) is welded to the light pipe (36, 360), or
the optical filter (60, 600) is clipped to the light pipe (36, 360).

4. The light module of any one of the preceding claims, wherein
the light pipe (36, 360) filters the white light emitted from the first LED (30, 300) to provide the non-white light emitted through the second lens section (28, 280).

5. The light module of any one of the preceding claims, further comprising
a first light module printed circuit board (PCB) (35, 350) mounted within the housing (14, 140), wherein the first LED (30, 300) and the second LED (32, 340) are attached to the first light module PCB (35, 350), emitting light in different directions.

6. The light module of claim 5, wherein
the first light module PCB (35) is in form of a flexible PCB, and/or
the first and second LEDs (300, 340) emit light in opposite directions.

7. The light module of any one of the preceding claims, further comprising
at least one light-directing structure (38) and/or at least one reflector (320) and/or at least one screening and/or reflecting element (70, 71, 700, 710, 720).

8. The light module of claim 7, wherein
there is a plurality of second LEDs (32) and a plurality of light-directing structures (38) being configured to direct light from the plurality of second LEDs (32) through the first lens section (26).

9. The light module of claim 8, with back-reference to claim 5 or 6, wherein
the plurality of light-directing structures (38) includes reflective surfaces that direct light from the plurality of second LEDs (32) in a direction perpendicular to a surface of the first light module PCB (35) and through the first lens section (26).

10. The light module of claim 7, wherein
the at least one reflector (320) is mounted within the housing (140) to reflect light emitted from the second LED (340) through the first lens section (280).

11. The light module of claim 10, further comprising
a second light module PCB (420) mounted within the housing (140); and
at least one third LED (380) attached to the second light module PCB (420),
wherein the at least one reflector (320) is further configured to reflect light emitted from the third LED (380) through the first lens section (260).

12. The light module of claim 10 or 11, wherein
the second and/or third LEDs (340, 380) are configured to emit light in one or more directions different than the forward-facing direction, and
the at least one reflector (320) is configured to re-direct the light emitted from the second and third LEDs (340, 380) in the forward-facing direction.

13. The light module of any one of the claims 7 to 12, wherein
the at least one screening and/or reflecting element (70, 71, 700, 710, 720) comprises
• a first screening and/or reflecting element (70, 700) arranged between the light guide (36, 360) and the housing (24, 240),
• a second screening and/or reflecting element (71, 710) arranged between the first and/or second LED (30, 300, 340) and the first lens section (26, 260), and/or
• a third screening and/or reflecting element (720) arranged between the third LED (380) and the first lens section (26, 260).

14. An exterior rear view device (10) of a vehicle comprising a head (16) supporting at least one reflective element and/or at least one camera, and at least one light module (14, 140) according to any one of the preceding claims.

15. The exterior rear view device of claim 14, further comprising
a base (18) configured to be attached to a vehicle surface (12),
wherein preferably the head (16) is moveably attached to the base (18).

16. A vehicle with at least one exterior rear view device (10) according to claim 14 or 15 and a controller for controlling the light module (14, 140).
